# DEMANDE DE BREVET EUROPEEN

(11) **EP 1 176 692 A1**
(43) Date de publication de la demande: **30.01.2002**
(21) Numéro de dépôt: 01401830.3
(22) Date de dépôt: 09.07.2001
(51) Int. Cl.: H02J 7/00

(54) **Dispositif pour lisser les transitoires de courant et de tension lors de la connexion ou de la déconnexion d'une batterie**

(30) Priorité: 27.07.2000 FR 0009837
(71) Demandeur: ALCATEL, 75008 Paris (FR)
(72) Inventeur: Bonnet, Laurent, 06580 Pegomas (FR)
(74) Mandataire: Sciaux, Edmond

(57) **Abrégé**

Dispositif destiné à lisser les transitoires de courant et de tension et à empêcher en conséquence la formation d'un arc électrique, lors de l'opération de connexion par laquelle une batterie d'alimentation chargée (1) est mise en circuit avec un équipement électrique de puissance (2), qu'elle doit alimenter, et/ou lors de l'opération inverse de déconnexion, au cours de laquelle est interrompu le circuit par lequel la batterie alimente l'équipement.
Il prévoit l'insertion d'un circuit (3) de lissage de transitoires en courant/tension pour compenser l'éventuel déséquilibre de tension susceptible d'apparaître entre les deux bornes, l'une (+) de la batterie et l'autre (A+) de l'équipement, entre lesquelles la connexion et l'interconnexion entre batterie et équipement sont alternativement réalisées.

## Description

L'invention concerne un dispositif destiné à empêcher la formation d'un arc électrique lors de l'opération de connexion, par laquelle une batterie d'alimentation est mise en circuit avec un équipement électrique de puissance qu'elle est chargée d'alimenter, lorsque ce circuit est susceptible de consommer du courant électrique dès sa connexion, et/ou lors de l'opération inverse de déconnexion, au cours de laquelle est interrompu le circuit par lequel la batterie alimente l'équipement.

Comme il est connu, lorsqu'une source d'énergie à basse impédance, telle qu'une batterie électrique d'alimentation chargée, est mise en circuit avec un circuit capacitif constituant une charge de faible impédance, il se génère initialement un courant qui n'est limité que par les impédances de faible valeur présentes dans le circuit et qui peut donc être de très forte intensité. Il se produit un arc électrique entre les organes de liaison par l'intermédiaire desquels la batterie et l'équipement se connectent, lorsqu'ils sont mis en circuit l'un avec l'autre. Ceci se produit par exemple à la mise en liaison d'une pièce de connexion reliée à la borne positive de la batterie avec une pièce de connexion reliée à une des bornes d'alimentation de l'équipement. Il est supposé que la batterie et l'équipement sont par ailleurs déjà reliés par une autre liaison, par exemple une liaison de masse, reliant la borne négative de la batterie à une seconde borne d'alimentation de l'équipement.

Comme il est aussi connu, un arc électrique est susceptible de se produire entre les organes de liaison par l'intermédiaire desquels une batterie d'alimentation et un équipement constituant une charge inductive sont mis en circuit, lorsque ce circuit électrique est interrompu. Cette interruption intervient par exemple lors d'une opération de déconnexion au cours de laquelle sont séparées, l'une de l'autre, deux pièces de connexion, respectivement reliées l'une à la batterie et l'autre à l'équipement, qui étaient jusqu'alors électriquement en contact.

L'apparition d'un arc électrique en phase de connexion ou de déconnexion d'une batterie à un équipement, qui est un phénomène gênant, doit parfois être totalement évitée. Tel est le cas, en particulier, lorsque connexion et/ou déconnexion sont susceptibles de se produire dans un milieu où se trouvent des matières facilement inflammables ou explosives, où lorsque tout risque de détérioration de la batterie, de l'équipement et du matériel qui les entourent doit être éliminé.

Une solution connue qui est mise en oeuvre dans le cas d'équipements destinés à être satellisés, consiste à connecter une batterie, à l'équipement qu'elle doit alimenter, alors qu'elle est entièrement déchargée et que ces bornes de connexion sont temporairement court-circuitées. La batterie est ensuite électriquement chargée sans que l'équipement ne soit déconnecté, ce qui conduit pratiquement à ce qu'il soit alors en service. Il est alors difficile de contrôler parfaitement la capacité de la batterie à pleine charge, ce qui conduit à surdimensionner les batteries des équipements. Une telle solution n'est pas très satisfaisante, en particulier pour les applications où l'on s'efforce d'optimiser la charge de la batterie à connecter.

L'invention propose donc un dispositif destiné à lisser les transitoires de courant et de tension et à empêcher la formation d'un arc électrique, lors de l'opération de connexion par laquelle une batterie d'alimentation est mise en circuit avec un équipement électrique de puissance qu'elle est chargée d'alimenter et/ou lors de l'opération inverse de déconnexion, au cours de laquelle est interrompu le circuit par lequel la batterie alimente l'équipement.

Selon une caractéristique de l'invention, ce dispositif prévoit l'insertion d'un circuit de lissage de transitoires en courant/tension pour compenser l'éventuel déséquilibre de tension susceptible d'apparaître entre les deux bornes, l'une de la batterie et l'autre de l'équipement, entre lesquelles la connexion et l'interconnexion entre batterie et équipement sont alternativement réalisées.

Selon l'invention, le circuit de lissage de transitoires comporte :
- un montage atténuateur comportant au moins un transistor, destiné à venir s'interposer entre la borne positive de la batterie et la borne correspondante de l'équipement entre lesquelles la connexion et la déconnexion batterie/équipement sont alternativement réalisées, la connexion étant obtenue par mises en liaison successives d'une première borne de la batterie avec une borne d'alimentation correspondante de l'équipement, d'une première borne du montage atténuateur et du circuit de lissage avec une seconde borne qui est, soit une seconde borne d'alimentation de l'équipement, soit la seconde borne de la batterie, et ensuite d'une seconde borne du montage atténuateur et du circuit de lissage avec la borne de la batterie ou d'équipement restant à relier ;
- un montage de commande de grille du ou des transistors, ledit montage comportant un circuit RC incluant au moins un élément capacitif et un élément résistif, l'élément capacitif étant interposé entre la grille de commande et l'électrode, ici dite de sortie, du ou d'au moins un des transistors, qui est reliée à la borne du dispositif prévue pour être connectée à la borne positive de l'équipement, l'élément résistif étant inséré entre la ou les grilles de commande et un organe de commutation qui permet de le connecter alternativement, soit à la borne du dispositif à laquelle se relie(nt) la ou les électrodes de sortie, l'élément résistif étant alors en parallèle avec l'élément capacitif, soit à cette même borne, via un générateur de tension.

Selon une forme préférée de mise en oeuvre de l'invention, le montage atténuateur est un montage dupliqué, composé de deux transistors MOS FET montés en parallèle entre les bornes communes au montage atténuateur et au dispositif par lesquelles ce montage dupliqué vient se relier, d'une part, à la borne positive de la batterie et, d'autre part, à la borne positive de l'équipement.. Le montage de commande de grille comporte un circuit RC dont l'élément capacitif est composé de deux condensateurs montés en parallèle entre la borne où se relient les électrodes de sortie des deux transistors et un point commun aux grilles de ces transistors. Ce circuit RC comporte aussi un élément résistif composé de résistances réparties en deux branches parallèles, les deux branches étant reliées, d'une part, au point commun aux grilles des transistors et, d'autre part, à l'organe de commutation qui permet de connecter alternativement l'ensemble que forment ces deux branches, soit à la borne où se relient les électrodes de sortie, soit à cette même borne, via un générateur de tension.

L'invention, ses caractéristiques et ses avantages sont précisés dans la description qui suit en liaison avec la figure unique définie ci-dessous.

La figure unique est un schéma de principe d'un dispositif prévu pour lisser les transitoires de courant et de tension et empêcher la formation d'un arc électrique, lors de la connexion ou de la déconnexion d'une batterie d'alimentation et d'un équipement électrique.

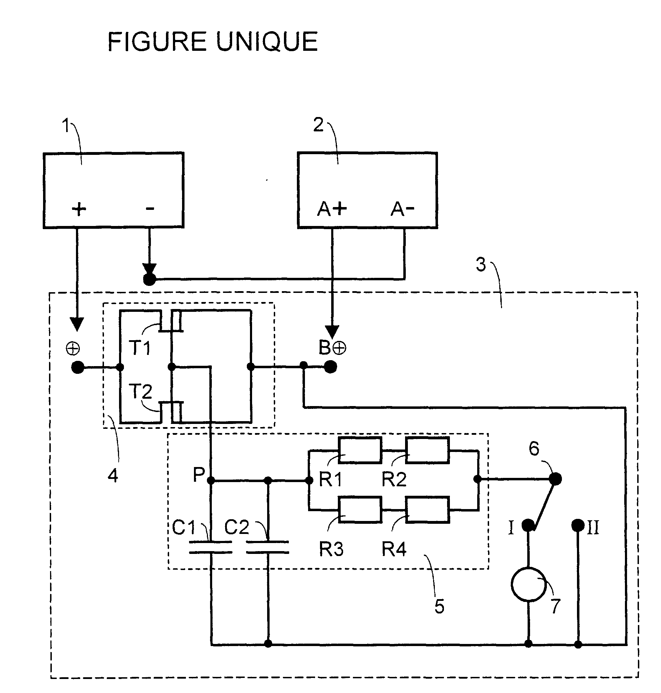

Le dispositif présenté sur la figure 1 permet de lisser les transitoires de courant et de tension et, en conséquence, d'empêcher la formation d'un arc électrique, lors de la connexion ou de la déconnexion d'une batterie d'alimentation 1, supposée de forte capacité, et d'un équipement électrique de puissance 2, par exemple d'une batterie prévue pour assurer l'alimentation d'un équipement satellisé.

Ce dispositif est plus particulièrement destiné à être mis en oeuvre dans le cadre d'opérations où l'on cherche à éliminer tout risque d'apparition d'un arc électrique, lors de la connexion ou de la déconnexion de la batterie et de l'équipement qu'elle doit alimenter et où ces opérations doivent impérativement pouvoir être réalisées, lorsque la batterie est totalement chargée.

L'alimentation de l'équipement 2 par la batterie 1 s'effectue à partir des deux bornes l'une positive + et l'autre négative - de la batterie qui doivent être reliées à cet effet avec deux bornes d'alimentation A+ et A- correspondantes de l'équipement. Un premier jeu de deux bornes appartenant l'une à la batterie et l'autre à l'équipement peut être raccordé sans risque, ces bornes étant ici supposées être les bornes - et A-.

La mise en circuit complète de la batterie 1 avec l'équipement 2 implique alors de relier la borne + de la batterie à la borne d'alimentation A+ de l'équipement. Ceci est réalisé selon l'invention, en faisant intervenir un circuit de lissage de transitoires en courant et/ou tension 3 qui vient s'insérer entre les bornes + et A+. Il est possible et ici prévu de relier ce circuit de lissage 3 à l'une des bornes + et A+, avant de le relier à l'autre, par exemple en reliant une borne B⊕ comportée par ce circuit à la borne A+ de l'équipement, de manière que les opérations de connexion et de déconnexion soient réalisées entre la borne + de la batterie et une borne ⊕ du circuit de lissage.

Comme il est connu, ces opérations de connexion et de déconnexion sont susceptibles d'être réalisées par l'intermédiaire de pièces de connexion complémentaires qui sont respectivement reliées l'une à la borne + de la batterie et l'autre à la borne ⊕ du circuit de lissage 3. Ces pièces sont prévues pour pouvoir être alternativement, soit mises électriquement en contact l'une avec l'autre, soit séparées l'une de l'autre de manière à ne plus être électriquement en liaison. Ceci n'est pas décrit plus avant ici, dans la mesure où les moyens mécaniques nécessaires aux opérations de connexion et de déconnexion ne font pas l'objet de la présente invention.

Le circuit 3 de lissage de transitoires courant/tension est prévu pour permettre de compenser l'éventuel déséquilibre de tension susceptible d'exister entre la borne + de la batterie et la borne ⊕ du circuit de lissage, dans les conditions indiquées ci-dessus, au moment de la connexion ou de la déconnexion par lesquelles ces bornes sont respectivement, soit reliées entre elles, soit électriquement séparées l'une de l'autre.

Dans une forme de réalisation du circuit de lissage 3, selon l'invention, ce circuit comporte un montage atténuateur 4, destiné à venir s'interposer entre la borne positive + de la batterie et la borne correspondante A+ de l'équipement, ce circuit de lissage étant placé entre les bornes ⊕ et B⊕ du circuit de lissage.

Le montage atténuateur 4 comporte au moins un transistor et ici une paire de transistors MOS FET référencés T1, T2 qui sont montés en parallèle entre les bornes ⊕ et B⊕ du circuit de lissage. Il permet d'agir sur le courant circulant entre ces bornes.. A cet effet, il est prévu un montage de commande 5 permettant d'agir sur l'électrode de commande de chaque transistor, soit ici sa grille. Ce montage de commande 5 comporte un circuit, de type RC, incluant un élément capacitif qui est dupliqué pour des raisons de sécurité qui est ici supposé composé de deux condensateurs C1 et C2 montés en parallèle. Le circuit RC comporte aussi un élément résistif qui est ici composé de deux branches parallèles comportant chacune deux résistances R1 et R2 pour l'une, R3 et R4 pour l'autre. Le montage constituant cet élément résistif est lui aussi dupliqué pour des raisons de sécurité, de même que le montage 4.

Les condensateurs C1 et C2 sont montés entre un point P commun aux grilles des transistors du montage atténuateur 4 et la borne B⊕ au niveau de laquelle ils sont reliés aux électrodes, ici dites de sortie, des deux transistors T1 et T2 de ce montage, qui sont destinées à être reliées à la borne positive de la batterie. Les deux branches parallèles que constituent les résistances sont montées entre le point P et une borne commune d'un organe commutateur 6 à deux positions. Cet organe commutateur permet de relier ces deux branches simultanément, soit à la borne B⊕, soit à une seconde borne d'un générateur de tension, lui-même relié par une première borne à la borne B⊕.
La connexion entre l'équipement et la batterie, implique une série de mises en liaison successives. Une mise en liaison doit être réalisée entre une première borne de la batterie, par exemple la borne - de cette batterie, et la borne d'alimentation correspondante de l'équipement, soit ici la borne A-. Une autre mise en liaison doit également être réalisée entre une première borne ⊕, ou B⊕, du montage atténuateur et une seconde borne qui est, soit la seconde borne d'alimentation A+ de l'équipement, soit la seconde borne de la batterie, ici supposée être la borne +. La mise en liaison à réaliser ensuite est celle qui est critique puisqu'elle conduit à l'alimentation de l'équipement et que c'est à son occasion qu'est susceptible d'apparaître un arc entre les pièces de connexion impliquées dans cette opération. Cette troisième étape de mise en liaison est ici à réaliser entre une seconde borne du montage atténuateur, soit donc celle des bornes ⊕ ou B⊕ restant à relier, et la borne de batterie + ou d'équipement A+ restant-elle aussi à relier.

Selon l'invention, il est nécessaire que l'organe de commutation 6 soit positionné de manière à mettre en circuit le générateur de tension 7 avec l'élément résistif du montage de commande 5, de manière que la résistance présentée par le montage atténuateur soit maximale, préalablement à la connexion entre batterie et équipement par réalisation de la troisième étape de mise en liaison. Le positionnement de l'organe de commutation 6 relie alors directement l'élément résistif à la borne B⊕, comme montré pour la position II sur la figure. La valeur maximale de résistance est ensuite réduite, après connexion, par positionnement de l'organe de commutation 6, de manière qu'il relie l'élément résistif au générateur de tension 7, comme illustré par la position I.

En cas de déconnexion, les opérations sont réalisées en ordre inverse, de manière que la résistance présentée par le montage atténuateur soit minimale au moment où est interrompue la liaison entre le circuit de lissage et soit la batterie, soit l'équipement. Cette interruption est ici supposée réalisée au niveau des pièces de connexion complémentaires, non représentées, qui permettent d'unir, soit la borne + de la batterie à la borne ⊕ du circuit de lissage, soit la borne d'alimentation A+ de l'équipement à la borne B⊕ de l'équipement.

Du fait de la duplication réalisée au niveau du circuit de lissage du dispositif selon l'invention, il est possible d'obtenir une grande sécurité de fonctionnement, en particulier si l'organe de commutation est réalisé de manière à pouvoir être commandé de manière automatique. La constitution modulaire du circuit de lissage permet qu'il soit réalisé de manière à prendre en compte la puissance à consommer.

Selon une forme de mise en oeuvre de l'invention, après connexion de la batterie à l'équipement, il est prévu de mettre en liaison les bornes ⊕ de la batterie et B⊕ de l'équipement directement par un fil électrique, non représenté, venant se substituer au circuit de lissage qui peut alors éventuellement être éliminé, en particulier s'il n'est pas prévu de déconnexion. L'opération de mise en liaison par fil qui est alors réalisée n'est pas susceptible de conduire à la production d'étincelle, puisque la résistance série qui existe alors entre batterie et équipement est celle que présente les transistors MOSFET, cette résistance dépendant du choix fait en matière de transistors et pouvant donc être maintenue à une valeur très faible.

## Revendications

1. Dispositif destiné à lisser les transitoires de courant et de tension et à empêcher la formation d'un arc électrique lors de l'opération de connexion par laquelle une batterie d'alimentation (1) est mise en circuit avec un équipement électrique de puissance (2) qu'elle est chargée d'alimenter et/ou lors de l'opération inverse de déconnexion au cours de laquelle est interrompu le circuit par lequel la batterie alimente l'équipement, **caractérisé en ce qu'**il prévoit l'insertion d'un circuit (3) de lissage de transitoires en courant/tension pour compenser l'éventuel déséquilibre de tension susceptible d'apparaître entre les deux bornes l'une (+) de la batterie et l'autre (A+) de l'équipement entre lesquelles la connexion et l'interconnexion entre batterie et équipement sont alternativement réalisées.

2. Dispositif selon la revendication 1, dans lequel le circuit de lissage de transitoires comporte :
- un montage atténuateur (4) comportant au moins un transistor (T1), destiné à venir s'interposer entre la borne positive (+) de la batterie et la borne correspondante (A+) de l'équipement entre lesquelles la connexion et la déconnexion entre batterie et équipement sont alternativement réalisées, la connexion étant obtenue par mises en liaison successives d'une première borne (-) de la batterie avec une borne d'alimentation correspondante (A-) de l'équipement, d'une première borne (⊕ ou B⊕) du montage atténuateur et du circuit de lissage avec une seconde borne qui est, soit une seconde borne d'alimentation (A+) de l'équipement, soit la seconde borne (+) de la batterie, et ensuite d'une seconde borne (B⊕ ou ⊕) du montage atténuateur et du circuit de lissage avec la borne de batterie (+) ou d'équipement (A+), restant à relier ;
- un montage (5) de commande de grille du ou des transistors, ledit montage comportant un circuit RC incluant au moins un élément capacitif (C1) et un élément résistif (R1), l'élément capacitif étant interposé entre la grille de commande et l'électrode, ici dite de sortie, du ou d'au moins un des transistors (T1), qui est reliée à la borne (B⊕) du dispositif prévue pour être connectée à la borne positive de l'équipement, l'élément résistif (R1) étant inséré entre la ou les grilles de commande et un organe de commutation (6) qui permet de le connecter alternativement, soit à la borne (B⊕) du dispositif où se relie(nt) la ou les électrodes de sortie, l'élément résistif étant alors en parallèle avec l'élément capacitif, soit à cette même borne, via un générateur de tension (7).

3. Dispositif selon la revendication 2, dans lequel le montage atténuateur (4) est un montage dupliqué, composé de deux transistors MOS FET (T1, T2) montés en parallèle entre les bornes (⊕, B⊕) du montage et du circuit de lissage par lesquelles ce montage dupliqué vient se relier, d'une part, à la borne positive de la batterie et, d'autre part, à la borne positive correspondante (A+) de l'équipement, et dans lequel le montage (5) de commande de grille comporte un circuit RC, dont l'élément capacitif est composé de deux condensateurs (C1, C2) en parallèle entre la borne (B⊕)où se relient les électrodes de sortie des deux transistors, et un point (P) commun aux grilles de ces transistors, ainsi que d'un élément résistif composé de résistances (R1 à R4) réparties en deux branches parallèles, les deux branches étant reliées, d'une part, au point (P) commun aux grilles des transistors et, d'autre part, à l'organe de commutation (6) qui permet de connecter alternativement l'ensemble que forme ces deux branches, soit à la borne (B⊕) où se relient les électrodes de sortie, soit à cette même borne, via un générateur de tension (7).
